# EUROPÄISCHE PATENTSCHRIFT

(11) **EP 1 574 286 B1**
(45) Veröffentlichungstag und Bekanntmachung des Hinweises auf die Patenterteilung: **19.03.2008**
(21) Anmeldenummer: 04003107.2
(22) Anmeldetag: 01.03.2004
(51) Int. Cl.: B23Q 11/10, B21H 5/02

(54) **Arbeitsverfahren und Vorrichtung zum Glätten von Zahnrädern**
Working method and device for the burnishing of gears
Procédé de travail et dispositif pour le brunissage des roues dentées

(43) Veröffentlichungstag der Anmeldung: 14.09.2005
(73) Patentinhaber: Linnenbrink, Wolfgang, 34414 Warburg-Rimbeck (DE)
(72) Erfinder: Linnenbrink, Wolfgang, 34414 Warburg-Rimbeck (DE)
(74) Vertreter: Rolf, Gudrun

(56) Entgegenhaltungen:
- EP-A- 0 423 914
- EP-A- 1 086 782
- EP-A- 1 291 129
- DE-A- 2 756 444
- DE-B- 1 022 863
- US-A- 1 630 835
- US-A- 4 414 780
- US-A- 4 528 779
- US-A- 4 919 232
- US-A1- 2003 012 616
- US-B1- 6 471 007

## Beschreibung

Die Erfindung betrifft ein Arbeitsverfahren und eine Vorrichtung zum Glätten von Zahnrädern gemäß den Oberbegriffen der Ansprüche 1 und 8.

Es ist eine Zahnradpolier- und -honmaschine bekannt, DE 3230860 C2, die einen ähnlichen Grundaufbau wie die vorliegende Vorrichtung zum Glätten von Zahnrädern aufweist, wobei bei solchen Vorrichtungen die zu glättenden Zahnräder und die verwendeten Glätträder mit einer großen Menge einer Kühl-Schmiermittel-Emulsion überspült werden, um das Entstehen von Reibungswärme zu vermindern und den Abrieb zu entfernen.

Nachteilig an der Verwendung einer solchen Kühl-Schmiermittel-Emulsion ist insbesondere, dass die gesamte Vorrichtung allseitig abgedichtet sein muss um ein Austreten von Flüssigkeit oder Spritzwasser zu verhindern und dass die Emulsion in einem Kreislauf gehalten und ständig aufbereitet, insbesondere der Abrieb aus der Emulsion abgeschieden bzw. herausgefiltert werden muss. Diese Aufbereitung ist sehr aufwändig und die verwendeten Filter müssen entsorgt und neue bereitgehalten werden, was insgesamt sehr hohe Betriebskosten, Wartungskosten und eine unnötige große Umweltbelastung erzeugt. Des Weiteren müssen die verwendeten Wellenlagerungen der Glätträder mit einer Zentralschmierung versehen sein, um nicht auf Dauer durch das zum Teil aggressive Kühl- und Schmiermittel zerstört zu werden. Selbst bei einem Überspülen der zu glättenden Zahnräder und der Glätträder nur mit dünnflüssigem Öl bleibt das Erfordernis einer Spülölaufbereitung erhalten.

Aufgabe der Erfindung ist es, ein Arbeitsverfahren und eine Vorrichtung zum Glätten von Zahnrädern zur Verfügung zu stellen, welche wesentlich kostengünstiger und umweltfreundlicher betrieben werden können bzw. einen wesentlich einfacheren Verfahrensablauf und Vorrichtungssaufbau ermöglichen.

Die Lösung dieser Aufgabe erfolgt in Verbindung mit den Oberbegriffsmerkmalen der Ansprüche 1 und 8 erfindungsgemäß im Zusammenhang mit den kennzeichnenden Merkmalen der genannten Ansprüche.

Dadurch, dass die Vorrichtung zum Glätten von Zahnrädern, die mit mindestens einem auf ein zu glättendes Zahnrad und damit in und außer Eingriff bringbaren radial einwirkenden Glättrad ausgestattet ist, mit einer Spritzdüse versehen ist, mit der ein feiner Schmiermittelsprühnebel, insbesondere aus Öl, auf die Zahnräder aufspritzbar ist, wird es ermöglicht, gänzlich auf die Verwendung einer Kühl- Schmiermittel-Emulsion zu verzichten. Hierdurch reduziert sich der Bauaufwand für die Vorrichtung ganz erheblich, da beispielsweise kein die Vorrichtung umschließender wasserdichter Kasten mehr um die Vorrichtung angeordnet werden muss und eine Zentralschmierung der Lager vollständig entfallen kann, die nun beispielsweise durch herkömmliche dauerabgedichtete Lager ersetzt werden können. Des Weiteren vereinfacht sich die Reinigung der Vorrichtung ganz wesentlich, da sie nicht immer vollständig von der Kühl-Schmiermittel-Emulsion benetzt wird. Auch eine Nachbearbeitung wie etwa ein Trocknen der Werkstücke entfällt vollständig.

Weitere vorteilhafte Ausgestaltungen des Gegenstandes der Erfindung ergeben sich mit und in Kombination aus den nachfolgenden Verfahrens- und Vorrichtungsansprüchen.

Dadurch, dass die Spritzdüse bei einer besonders vorteilhaften Ausgestaltung der Vorrichtung direkt auf das zu glättende Zahnrad gerichtet ist, wird es ermöglicht, mit einer extrem geringen Sprühölmenge eine ausreichende Schmierung während Glättprozesses zu gewährleisten, ohne das die Glätträder oder das zu glättende Zahnrad hiervon negativ beeinflusst würden. Da es sich bei der Vorrichtung um eine reine Glattvorrichtung von Zahnrädern handelt, bei der beispielsweise Zunderrückstände der Wärmebehandlung der Zahnrädern entfernt werden, ist kaum mit einem nennenswerten Materialabtrag zu rechnen, sodass auf die Verwendung von Spülöl oder anderer Reinigungsflüssigkeit gänzlich verzichtet werden kann.

Das Schmiermittel wird bevorzugterweise in einem freien Oberflächenbereich des zu glättenden Zahnrades auf dieses aufgespritzt, wenn das sich bereits drehende Glättrad noch lastfrei mit dem zu glättenden Zahnrad in Eingriff gebracht worden ist, wobei dies vorteilhafterweise während eines vollständigen Umlaufs des zu glättenden Zahnrades geschieht, wodurch vor Beginn des Grundarbeitsschrittes mit Aufbringen der hohen Anpresskraft eine vollständige und ausreichende Schmierung des gesamten Bearbeitungsbereichs des Zahnrades sichergestellt wird. Denkbar sind auch Verfahrensabläufe, bei denen das Schmiermittel ein- oder auch mehrmalig kurz vor und/ oder zu Beginn und/ oder auch während des Glättprozesses aufgespitzt wird.

Gemäß einer weiteren bevorzugten Ausführungsform des Gegenstandes der Erfindung ist die Glättmaschine mit einer Luftstrom erzeugenden Vorrichtung sowie entsprechenden Luftverteilerleitungen zu dem zu glättenden Zahnrad, insbesondere aber nur zu den Glätträdern ausgestattet, sodass deren Erwärmung auf Grund von Reibungswärme auf höchst einfache und kostengünstige Art und Weise entgegengewirkt werden kann. Weiterhin tragen die in ständigem Austausch stehenden zu glättenden Zahnräder zu einer Kühlung der stets vorrichtungsfesten Glätträdern bei. Prinzipiell könnten hier auch andere Gase eingesetzt werden.

Besonders vorteilhaft ist eine Ausführungsform der Vorrichtung, bei der die Luftstrom erzeugende Vorrichtung mit einer Baueinheit versehen ist, die nach dem Joule-Thompson-Effekt arbeitet und dazu eine enge Expansionsdüse aufweist, in der sich beim Durchtritt die hoch komprimierte Luft stark abkühlt, wobei hier Werte unter -30 °C bis -50 °C erreicht werden können. Mit einer solchen Baueinheit wird deswegen der Entstehung von Reibungswärme auf technisch einfache aber effektive Art und Weise entgegengewirkt, die zudem quasi verschleißfrei arbeitet.

Das mit der Vorrichtung durchführbare Arbeitsverfahren entspricht dem im Wesentlichen bekannten Verfahren zum Glätten von Zahnrädern, wobei deren übliche Schmierung und Kühlung mittels einer Kühl-Schmiermittel-Emulsion oder mit reinen Spülölen durch eine extreme Minimalmengenschmierung mit einem Schmiermittel wie Öl ersetzt ist. Dieses wird zu Beginn oder während, insbesondere aber vor Beginn des Glättprozesses einmalig, vorteilhafterweise direkt durch eine einzelne Spritzdüse als feiner Sprühnebel auf das zu glättenden Zahnrad aufgespritzt, wobei diese Sprühölmenge derart gering ist, dass auch nach mehrstündigem Betrieb der Vorrichtung keine Ölspritzer oder größere Verschmutzungen im Bereich unterhalb der Glätträder aufzufinden sind. Das Aufbringen des Schmiermittels erfolgt bevorzugt dann, wenn das sich drehende Glättrad noch lastfrei mit dem zu glättenden Zahnrad in Eingriff gebracht worden ist, insbesondere mit einem so lange anhaltenden Sprühstrahl, dass dieses über seinen gesamten Umfang und sämtliche Zahnflanken mit Schiermittel benetzt werden kann.

Das Arbeitsverfahren ist demnach auch äußerst umweltfreundlich, da die eingesetzten Ölmengen sehr gering sind und keine zu recycelnden Flüssigkeiten anfallen. Des Weiteren ist die gesamte Vorrichtung auch im Betrieb jederzeit sehr gut zugänglich und der Arbeitsprozess beobachtbar, da die Vorrichtung nicht permanent quasi "unter Wasser" steht und die Sicht nicht durch bespritze Spritzschutzwände behindert ist.

Nachfolgend ist ein Ausführungsbeispiel der Erfindung anhand von Zeichnungen näher beschrieben. Es zeigen:

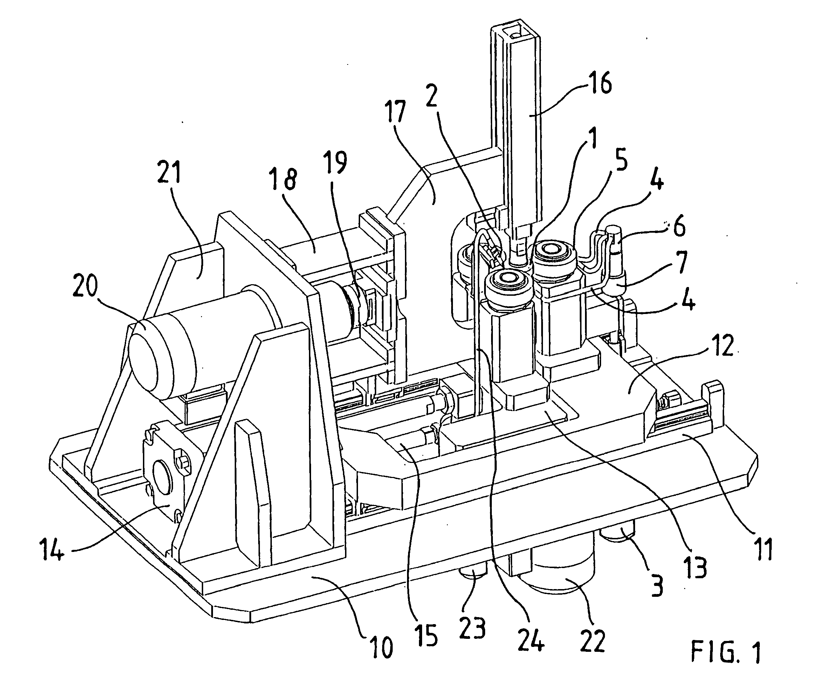

- Fig. 1: eine räumliche Gesamtdarstellung einer Vorrichtung zum Glätten von Zahnrädern und
- Fig. 2: ein Ausschnittsvergrößerung des Bearbeitungsbereichs.

Die Vorrichtung zum Glätten von Zahnrädern Sie besteht aus einem Maschinentisch 10, auf dem zwei parallele Führungsschienen 11 aufgesetzt sind, auf denen ein rahmenförmiger Schlitten 12 für ein angetriebenes Glättrad 5 sowie innerhalb des Schlittens 12 ein weiterer Schlitten 13 für ein getriebenes Paar von Glätträdern 5 verschieblich angeordnet ist, wobei am Schlitten 12 für das angetriebene Glättrad 5 ein Anpresszylinder 14 angeordnet ist, der den Schlitten 13 für das getriebene Paar Glätträder 5 in Richtung auf das angetriebene Glättrad 5 anpresst, wobei zwischen dem Paar Glätträder 5 und dem einzelnen Glättrad 5 ein zu glättendes Zahnrad 1 als Werkstück im Betrieb unter einem hohen radialen Druck eingespannt gehalten wird. Axial wird das zu glättende Zahnrad 1 von einer Klemmvorrichtung 16 radial beweglich geklemmt, die an einem C-förmigen Bügel 17 angeordnet ist, welcher seinerseits über Federpakete 18 und über einen Exzenter 19 an einem Haltegestell 21 so befestigt ist, dass er über einen Exzenterantrieb 20 eine vertikale Oszillation des axial nur geklemmten, radial quasi schwimmend gelagerten Zahnrades 1 ermöglicht.

Um die Vorrichtung auf unterschiedlich große zu glättende Zahnräder 1 und/ oder unterschiedliche Glätträder 5 einstellen zu können, ist der gesamte Schlitten 13 zusammen mit dem Schlitten 12 über einen kleinen Positionierzylinder 15 im Verhältnis zu einer festen vertikalen Achse der Klemmvorrichtung 16 auf den Führungsschienen 11 verfahrbar.

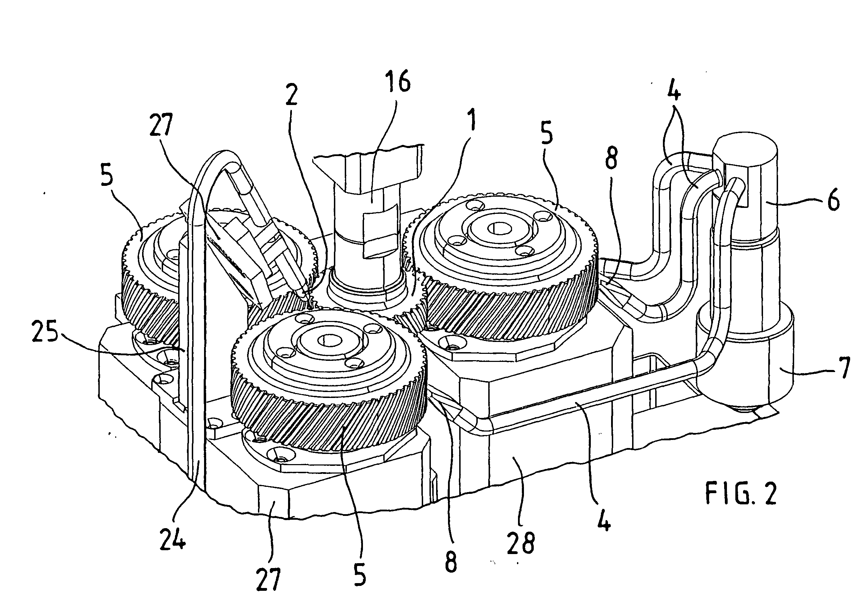

Wie in der Fig. 2 vergrößert dargestellt, besteht der Bearbeitungsbereich der Vorrichtung zum Glätten von Zahnrädern im Wesentlichen aus drei Glätträdern 5 mit festen oder verschwenkbaren vertikalen Drehachsen, von denen ein erstes Glättrad 5 auf dem Schlitten 12 angeordnet und durch einen Motor 22 angetrieben ist. Die beiden anderen Glätträder 5 sind paarweise auf dem inneren Schlitten 13 angeordnet und über den Anpresszylinder 14 in Richtung auf das angetriebene Glättrad 5 so anpressbar, dass ein dazwischen angeordnetes zu glättendes Zahnrad 1 mit einer Kraft von beispielsweise 150 bis 500 kg an die Glätträder 5 angedrückt werden kann.

Die Vorrichtung ist des Weiteren mit einer Spritzdüse 2 ausgestattet, die über einen Druckerzeuger 23, etwa eine Pumpe, und eine Zuleitung 24 mit einem solchen Druck beaufschlagbar ist, dass ein fein zerstäubter Ölsprühnebel während eines vollständigen Umlaufs des zu glättenden Zahnrades 1 auf einen freien Oberflächenbereich des zu glättenden Zahnrades 1 aufspritzbar ist. Das Aufbringen des Schmiermittels erfolgt, nachdem das drehende Glättrad 5 noch lastfrei, d.h. noch ohne mit einer Anpresskraft beaufschlagt zu sein, mit dem zu glättenden Zahnrad 1 in Eingriff gebracht worden ist. Die Düse 2 ist über einen Halteblock 25 und einen winkelverstellbaren Träger 26 am Schlitten 13 so angeordnet, dass ein optimiertes Aufbringen der Minimalmenge an Schmiermittel durch einen sehr kurzen Pumpenhub erfolgen kann. Die Erzeugung des kurzen Sprühstrahles könnte jedoch auch anders, etwa durch eine ventilgesteuerte Düse erfolgen.

In Fig. 2 ist des Weiteren der nach dem Joule-Thompson-Effekt arbeitender Luftkühler 7 erkennbar, dem sich ein Luftverteiler 6 anschließt, der durch drei Luftverteilerleitungen 4 und Kaltluftdüsen 8 die stark auf beispielsweise bis zu -50 °C herunter gekühlte Luft gegen die zu kühlenden Glätträder 5 richtet. Falls erforderlich, können auch mehr Luftverteilerleitungen 4, auch zu dem zu glättenden Zahnrad 1, vorgesehen werden. Die Luft wird von einer luftstromerzeugenden Vorrichtung 3 wie einer Pumpe oder einem Kompressor erzeugt, die unterhalb des Maschinentisches 10 angeordnet ist.

## Patentansprüche

1. Arbeitsverfahren zum Glätten von Zahnrädern in einer entsprechenden Vorrichtung mit mindestens einem auf ein zu glättendes Zahnrad (1) radial einwirkenden und damit in Eingriff und außer Eingriff bringbaren zahnradähnlichen Glättrad (5), bei dem das Glättrad (5) über einen Motor (22) angetrieben und das zu glättende Zahnrad (1) während eines Hauptarbeitsschrittes, mit einer hohen Anpresskraft und entlang seiner Drehachse oszillierend an das Glättrad (5) angedrückt gehalten wird, **dadurch gekennzeichnet, dass** eine Minimalmenge Schmiermittel auf das zu glättende Zahnrad (1) und/ oder auf das Glättrad (5) aufgebracht wird und dass das Schmiermittel in einem freien Oberflächenbereich des zu glättenden Zahnrades (1) auf dieses aufgespritzt wird.

2. Arbeitsverfahren nach Anspruch 1, **dadurch gekennzeichnet, das** Aufbringen des Schmiermittels erfolgt, nachdem das drehende Glättrad (5) noch lastfrei mit dem zu glättenden Zahnrad (1) in Eingriff gebracht worden ist.

3. Arbeitsverfahren nach einem der vorgenannten Ansprüche, **dadurch gekennzeichnet, dass** die Minimalmenge des Schmiermittels durch eine Spritzdüse (2) als sehr feiner Sprühnebel aufgebracht wird.

4. Arbeitsverfahren nach einem der vorgenannten Ansprüche, **dadurch gekennzeichnet, dass** das Schmiermittel durch einen kurzen Pumpenhub eines Druckerzeugers (23) aufgespritzt wird.

5. Arbeitsverfahren nach einem der vorgenannten Ansprüche, **dadurch gekennzeichnet, dass** das Schmiermittel während eines vollständigen Umlaufs des zu glättenden Zahnrades (1) auf dieses aufgebracht wird.

6. Arbeitsverfahren nach einem der vorgenannten Ansprüche, **dadurch gekennzeichnet, dass** die Glätträder (5) und/ oder das zu glättende Zahnrad (1) zur Kühlung mit einem Luftstrom angeblasen werden.

7. Arbeitsverfahren nach einem der vorgenannten Ansprüche, **dadurch gekennzeichnet, dass** der Luftstrom aus Kaltluft besteht, wobei zunächst Umgebungsluft von einem Druckerzeuger (23) unter hohen Druck gesetzt und anschließend, den Joule-Thompson-Effekt nutzend, im Luftkühler (7) eine enge Düse durchtritt und dabei stark abgekühlt wird.

8. Vorrichtung zur Durchführung eines Arbeitsverfahrens nach einem der Ansprüche 1 bis 8 mit mindestens einem auf ein zu glättendes Zahnrad (1) radial einwirkenden und damit in und außer Eingriff bringbaren zahnradähnlichen Glättrad (5), **dadurch gekennzeichnet, dass** sie mit einer einen feinen Sprühnebel erzeugenden Spritzdüse (2) für ein Schmiermittel und einem Druckerzeuger (23) ausgestattet ist und dass der Sprühnebel auf den Bearbeitungsbereich eines zu glättenden Zahnrades (1) und/ oder auf ein Glättrad (5) aufspritzbar ist und dass die Spritzdüse (2) auf einem freien Oberflächenbereich des zu glättenden Zahnrades (1) gerichtet ist.

9. Vorrichtung nach Anspruch 8, **dadurch gekennzeichnet, dass** sie mit einer Luftstrom erzeugenden Vorrichtung (3) sowie Verteilerleitungen (4) zu den Glätträdern (5) ausgestattet ist.

10. Vorrichtung nach einem der vorgenannten Ansprüche 8 bis 9, **dadurch gekennzeichnet, das** die Luftstrom erzeugende Vorrichtung (3) einen den Joule-Thompson-Effekt nutzenden Luftkühler (7) mit einer engen Expansionsdüse für komprimierte Luft aufweist, in der der Luftstrom stark abkühlbar ist.

## Claims

1. A working method for burnishing gearwheels in a corresponding device having at least one burnishing wheel (5), similar to a gearwheel, that acts radially on a gearwheel (1) to be burnished and therefore may be engaged and disengaged, in which the burnishing wheel (5) is driven via a motor (22) and the gearwheel (1) to be burnished is kept pressed with a high pressure force and along its axis of rotation oscillating against the burnishing wheel (5) during a main operating step, **characterized in that** a minimal quantity of lubricant is applied to the gearwheel (1) to be burnished and/or to the burnishing wheel (5) and that the lubricant is sprayed onto a free surface region of the gearwheel (1) to be burnished.

2. The working method according to Claim 1, **characterized in that** the lubricant is applied after the rotating burnishing wheel (5) has been engaged load-free with the gearwheel (1) to be burnished.

3. The working method according to one of the preceding claims, **characterized in that** the minimal quantity of lubricant is applied through a spray nozzle (2) as a very fine spray mist.

4. The working method according to one of the preceding claims, **characterized in that** the lubricant is sprayed by a short pump stroke of a pressure generator (23).

5. The working method according to one of the preceding claims, **characterized in that** the lubricant is applied to the gearwheel (1) to be burnished during a complete rotation thereof.

6. The working method according to one of the preceding claims, **characterized in that** the burnishing wheels (5) and/or the gearwheel (1) to be burnished have an air stream blown on them for cooling.

7. The working method according to one of the preceding claims, **characterized in that** the air stream is made of cold air, ambient air first being subjected to high pressure by a pressure generator (23) and subsequently, using the Joule-Thompson affect, passing a narrow nozzle in the air cooler (7) and being cooled down strongly at the same time.

8. A device for performing a working method according to one of the preceding Claims 1 through 7 having at least one burnishing wheel (5), similar to a gearwheel, that acts radially on a gearwheel (1) to be burnished and therefore may be engaged and disengaged, **characterized in that** it is equipped with a spray nozzle (2), which generates a fine spray mist, for a lubricant, and a pressure generator (23), and the spray mist is sprayable onto the operating region of a gearwheel (1) to be burnished and/or onto a burnishing wheel (5) and that the spray nozzle (2) is pointed toward a free surface region of the gearwheel (1) to be burnished.

9. The device according to Claim 8, **characterized in that** it is equipped with a device (3) that generates an air stream and distributor lines (4) to the burnishing wheels (5).

10. The device according to one of the preceding Claims 8 through 9, **characterized in that** the device (3) generating the air stream has an air cooler (7), which uses the Joule-Thompson affect, having a narrow expansion nozzle for compressed air, in which the air stream may be strongly cooled.

## Revendications

1. Procédé de travail pour le brunissage de roues dentées dans un dispositif correspondant, comprenant au moins une roue de brunissage (5) de type roue dentée agissant radialement sur une roue dentée (1) à brunir et pouvant être amenée en engagement et hors d'engagement avec celle-ci, la roue de brunissage (5) étant entraînée par le biais d'un moteur (22) et la roue dentée à brunir (1), pendant une étape de travail principale, étant maintenue pressée avec une grande force d'application contre la roue de brunissage (5) en oscillant le long de son axe de rotation, **caractérisé en ce que** l'on applique sur la roue dentée à brunir (1) et/ou sur la roue de brunissage (5) une quantité minimale de lubrifiant et **en ce que** le lubrifiant est pulvérisé sur la roue dentée à brunir (1) dans une région libre de sa surface.

2. Procédé de travail selon la revendication 1, **caractérisé en ce que** l'application du lubrifiant a lieu après que la roue de brunissage rotative (5) a d'abord été amenée en prise en l'absence de charge avec la roue dentée à brunir (1).

3. Procédé de travail selon l'une quelconque des revendications précédentes, **caractérisé en ce que** la quantité minimale de lubrifiant est appliquée par une buse de pulvérisation (2) sous forme d'un très fin brouillard pulvérisé.

4. Procédé de travail selon l'une quelconque des revendications précédentes, **caractérisé en ce que** le lubrifiant est pulvérisé par une courte course de pompe d'un générateur de pression (23).

5. Procédé de travail selon l'une quelconque des revendications précédentes, **caractérisé en ce que** le lubrifiant est appliqué sur la roue dentée à brunir (1) pendant une rotation complète de celle-ci.

6. Procédé de travail selon l'une quelconque des revendications précédentes, **caractérisé en ce que** les roues de brunissage (5) et/ou la roue dentée à brunir (1) sont refroidies par soufflage avec un jet d'air.

7. Procédé de travail selon l'une quelconque des revendications précédentes, **caractérisé en ce que** le jet d'air se compose d'air froid, de l'air ambiant provenant d'un générateur de pression (23) étant d'abord mis sous haute pression et ensuite, en utilisant l'effet Joule-Thompson, étant guidé à travers une étroite buse dans le refroidisseur d'air (7) et y étant fortement refroidi.

8. Dispositif pour mettre en oeuvre un procédé de travail selon l'une quelconque des revendications 1 à 7, comprenant au moins une roue de brunissage (5)de type roue dentée agissant radialement sur une roue dentée (1) à brunir et pouvant être amenée en engagement et hors d'engagement avec celle-ci, **caractérisé en ce qu'**il est muni d'une buse de pulvérisation (2) produisant un fin brouillard pulvérisé pour un lubrifiant et d'un générateur de pression (23), et **en ce que** le brouillard pulvérisé peut être pulvérisé sur la région d'usinage d'une roue dentée à brunir (1) et/ou sur une roue de brunissage (5) et **en ce que** la buse de pulvérisation (2) est orientée vers une région de surface libre de la roue dentée à brunir (1).

9. Dispositif selon la revendication 8, **caractérisé en ce qu'**il est muni d'un dispositif (3) produisant un jet d'air ainsi que de conduites de distribution (4) vers les roues de brunissage (5).

10. Dispositif selon l'une quelconque des revendications précédentes 8 à 9, **caractérisé en ce que** le dispositif (3) produisant un jet d'air présente un refroidisseur d'air (7) utilisant l'effet Joule-Thompson, avec une buse d'expansion étroite pour l'air comprimé, dans laquelle le jet d'air peut être fortement refroidi.
